# EUROPEAN PATENT APPLICATION

(11) **EP 4 560 949 A1**
(43) Date of publication of application: **28.05.2025**
(21) Application number: 23862229.4
(22) Date of filing: 29.08.2023
(51) Int. Cl.: H04L 1/00

(54) **MULTIPLE SPATIAL STREAM TRANSMISSION METHOD AND RELATED APPARATUS**

(30) Priority: 07.09.2022 CN 202211090862
(71) Applicant: Huawei Technologies Co., Ltd., Shenzhen, Guangdong 518129 (CN)
(72) Inventor: RUAN, Wei, Shenzhen, Guangdong 518129 (CN); JIANG, Wei, Shenzhen, Guangdong 518129 (CN)
(74) Representative: Pfenning, Meinig & Partner mbB
(86) International application number: PCT/CN2023/115564
(87) International publication number: WO 2024/051534

(57) **Abstract**

This application relates to a multiple spatial stream transmission method and a related apparatus. The method includes: A transmitter device obtains a modulation and coding scheme MCS corresponding to each of multiple spatial streams, and sends data of the multiple spatial streams based on the MCS corresponding to each spatial stream. A receiver device receives the data of the multiple spatial streams, and decodes and demodulates the data of each spatial stream based on the MCS corresponding to each spatial stream. According to the method in this application, spatial stream scheduling flexibility can be improved, and a system throughput can be improved.

## Description

This application claims priority to Chinese Patent Application No. 202211090862.9, filed with the China National Intellectual Property Administration on September 7, 2022 and entitled "MULTIPLE SPATIAL STREAM TRANSMISSION METHOD AND RELATED APPARATUS", which is incorporated herein by reference in its entirety.

### TECHNICAL FIELD

This application relates to the field of wireless communication technologies, and in particular, to a multiple spatial stream transmission method and a related apparatus.

### BACKGROUND

Wi-Fi is short for wireless fidelity, and is a wireless fidelity technology, that is, a wireless local area network.

Since the release of the first-generation 802.11 standard in 1997, Wi-Fi has experienced great development and popularization. Currently, Wi-Fi has become the first choice for more users to access the internet, and is gradually replacing wired access. A rate of seven generations of Wi-Fi systems (801.11, 802.11b, 802.11a/g, 802.11n, 802.11ac, 802.11ax, 802.11be) that have been developed and popularized is greatly improved in each generation of 802.11 standards, to adapt to new service applications and reduce a gap between Wi-Fi and a wired network bandwidth.

A MIMO technology is introduced in 802.11n. The MIMO technology is supported in 802.11ac, 802.11ax, and 802.11be. One of application directions of the MIMO technology is spatial multiplexing. To be specific, multiple independent transmission channels, that is, spatial streams, are formed through joint processing at a transmitter and a receiver, to increase a channel capacity. However, in a transmission process of the multiple spatial streams, there are problems of a small system throughput and insufficient flexibility of spatial stream scheduling.

### SUMMARY

Embodiments of this application provide a multiple spatial stream transmission method and a related apparatus, to improve spatial stream scheduling flexibility and improve a system throughput.

According to a first aspect, this application provides a multiple spatial stream transmission method. The method is performed by a transmitter device, and may be specifically an AP device or a STA device, or may be a chip used in an AP device or a STA device. The following uses an example in which an execution body is the AP device for description. The method includes: obtaining a modulation and coding scheme MCS corresponding to each of multiple spatial streams; sending data of the multiple spatial streams based on the MCS corresponding to each spatial stream.

In embodiments of this application, different modulation and coding schemes are configured for each of the multiple spatial streams, so that the data corresponding to each spatial stream can be independently coded, modulated, and transmitted. In this way, a bearer capability of each spatial stream is fully utilized, and a system throughput is improved. In addition, because data of a single spatial stream can be independently decoded, a receiver device may request the transmitter device to independently retransmit the data of the single spatial stream, thereby improving spatial stream scheduling flexibility.

With reference to the first aspect, in a possible implementation, before the sending data of the multiple spatial streams based on the MCS corresponding to each spatial stream, the method further includes: sending first indication information, where the first indication information includes a plurality of user fields, each of the plurality of user fields corresponds to one spatial stream, and each of the plurality of user fields is used to indicate an MCS of a corresponding spatial stream; or the first indication information includes at least one user field, each of the at least one user field includes a plurality of user subfields, each of the plurality of user subfields corresponds to one spatial stream, and each of the at least one user field is used to indicate MCSs of the multiple spatial streams corresponding to the plurality of included user subfields.

In embodiments of this application, the MCS corresponding to each spatial stream is sent to the receiver device by using the first indication information, so that the receiver device can determine, based on the first indication information, the MCS corresponding to each spatial stream, and quickly demodulate and decode data of each spatial stream in a correct manner. Demodulation and decoding efficiency and accuracy are improved.

Optionally, the first indication information is carried in signal field sig information.

With reference to the first aspect, in a possible implementation, the obtaining an MCS corresponding to each of multiple spatial streams includes: sending a first message, where the first message is used to request to obtain a capability of a receiver, and the capability of the receiver includes a quantity of spatial streams receivable by the receiver device or an MCS range supported by the receiver device; receiving a feedback message, where the feedback message includes the capability of the receiver; and determining, based on the capability of the receiver, the MCS corresponding to each of the multiple spatial streams.

In embodiments of this application, capability negotiation is performed between the transmitter device and the receiver, so that the transmitter device determines, based on the capability of the receiver, a quantity of spatial streams, a location of a spatial stream, and the MCS of each spatial stream that are allocated to the receiver device. In this way, the transmitter device can send spatial stream data to the receiver device by using a more accurate MCS, and a bearer capability of each spatial stream that communicates with the receiver device is fully utilized. This effectively improves a throughput capability of a communication system.

Optionally, the first message is carried in a beacon frame or a probe response frame, and/or the feedback message is carried in a probe request frame or an association request frame.

With reference to the first aspect, in a possible implementation, the obtaining an MCS corresponding to each of multiple spatial streams includes: sending a measurement frame, and receiving a measurement result for the measurement frame, where the measurement result is used to represent channel quality of each of the multiple spatial streams; and determining, based on the measurement result, the MCS corresponding to each of the multiple spatial streams.

In embodiments of this application, the transmitter device sends the measurement frame to the receiver device, to measure channel quality between the transmitter device and the receiver device, so that the transmitter device can determine, based on a real-time channel measurement result, a quantity of spatial streams that can be supported by the receiver device and channel quality corresponding to each spatial stream. Further, the MCS corresponding to each spatial stream is configured for the receiver device, so that the transmitter device can send the spatial stream data to the receiver device by using the more accurate MCS, and the bearer capability of each spatial stream that communicates with the receiver device is fully utilized. This effectively improves the throughput capability of the communication system.

Optionally, the measurement result includes at least one of the following: a post signal-to-noise ratio SNR of each spatial stream channel, an element value of a channel gain matrix H, a singular value decomposition SVD result V of the channel gain matrix, compression information of H or V, and a matrix obtained by H based on a preset mapping relationship.

With reference to the first aspect, in a possible implementation, each of the multiple spatial streams is used to send one or more MPDUs, and a length of the one or more MPDUs of each spatial stream is less than or equal to a bearer capability of each spatial stream.

With reference to the first aspect, in a possible implementation, MPDUs sent in different spatial streams in the multiple spatial streams correspond to different priorities, and the method further includes: reliability of each of the multiple spatial streams is in a positive correlation with a priority of the MPUD sent by each spatial stream; and/or adjusting the reliability of each spatial stream based on the priority of the MPDU sent by each of the multiple spatial streams, so that the reliability of each spatial stream is in the positive correlation with the priority of the MPUD sent by each spatial stream.

With reference to the first aspect, in a possible implementation, the reliability of the spatial stream is improved by reducing the MCS of the spatial stream.

Optionally, the priority of the MPDU is determined based on a traffic identifier TID.

With reference to the first aspect, in a possible implementation, the method further includes: receiving transmission feedback information, where the transmission feedback information indicates that a first MPDU of a first spatial stream in the multiple spatial streams fails to be transmitted; and
retransmitting the first MPDU through the first spatial stream or a spatial stream other than the first spatial stream.

In embodiments of this application, the data corresponding to the spatial stream is divided based on the bearer capability of the spatial stream, so that the data carried in each spatial stream can be independent, and the transmitter device can independently send the data of the spatial stream after an error occurs in decoding and demodulating the data of the spatial stream by the receiver device. Data scheduling flexibility of the transmission system is improved, and power consumption that may be caused by data retransmission is reduced.

With reference to the first aspect, in a possible implementation, the method further includes: adjusting, based on a transmission error rate corresponding to each of the multiple spatial streams, the MCS corresponding to each spatial stream.

With reference to the first aspect, in a possible implementation, the adjusting, based on a transmission error rate corresponding to each of the multiple spatial streams, the MCS corresponding to each spatial stream includes: increasing an MCS of a single spatial stream in the multiple spatial streams if a transmission error rate of the single spatial stream is less than a first preset threshold, or decreasing an MCS of a single spatial stream in the multiple spatial streams if the transmission error rate of the single spatial stream is greater than a second preset threshold.

According to a second aspect, this application provides a multiple spatial stream transmission method. The method is performed by a receiver device, and may be specifically a STA device or an AP device, or may be a chip used in a STA device or an AP device. The following uses an example in which an execution body is the STA device for description. The method includes: receiving data of multiple spatial streams, where each of the multiple spatial streams corresponds to a different modulation and coding scheme MCS; and decoding and demodulating data of each spatial stream based on the MCS corresponding to each spatial stream.

With reference to the second aspect, in a possible implementation, before the receiving data of multiple spatial streams, the method further includes:
receiving first indication information, where the first indication includes a plurality of user fields, each of the plurality of user fields corresponds to one spatial stream, and each of the plurality of user fields is used to indicate an MCS of a corresponding spatial stream; or the first indication information includes at least one user field, each of the at least one user field includes a plurality of user subfields, each of the plurality of user subfields corresponds to one spatial stream, and each of the at least one user field is used to indicate MCSs of the multiple spatial streams corresponding to the plurality of included user subfields; and the decoding and demodulating data of each spatial stream based on the MCS corresponding to each spatial stream includes:
decoding and demodulating the data of each spatial stream based on an MCS that is of a spatial stream and that is indicated by the first indication information.

Optionally, the first indication information is carried in signal field sig information.

With reference to the second aspect, in a possible implementation, before the receiving data of multiple spatial streams, the method further includes:
receiving a first message, where the first message is used to request to obtain a capability of a receiver, and the capability of the receiver includes a quantity of spatial streams receivable by the receiver device or an MCS range supported by the receiver device; sending a feedback message, where the feedback message includes the capability of the receiver.

Optionally, the first message is carried in a beacon frame or a probe response frame, and/or the feedback message is carried in a probe request frame or an association request frame.

With reference to the second aspect, in a possible implementation, before the receiving data of multiple spatial streams, the method further includes:
receiving a measurement frame, and receiving a measurement result for the measurement frame, where the measurement result is used to represent channel quality of each of the multiple spatial streams.

Optionally, the measurement result includes at least one of the following: a post signal-to-noise ratio SNR of each spatial stream channel, an element value of a channel gain matrix H, a singular value decomposition SVD result V of the channel gain matrix, compression information of H or V, and a matrix obtained by H based on a preset mapping relationship.

With reference to the second aspect, in a possible implementation, the data of each of the multiple spatial streams includes one or more MPDUs corresponding to each spatial stream.

With reference to the second aspect, in a possible implementation, MPDUs sent in different spatial streams of the multiple spatial streams correspond to different priorities, and reliability of each spatial stream is in a positive correlation with a priority of an MPUD sent by each spatial stream.

With reference to the second aspect, in a first possible implementation, the method further includes:
checking the MPDU corresponding to each of the multiple spatial streams, to determine whether the MPDU is successfully checked; and
sending transmission feedback information if a first MPDU corresponding to a first spatial stream in the multiple spatial streams fails to be checked, where the transmission feedback information indicates that the first MPDU corresponding to the first spatial stream is incorrectly transmitted.

With reference to the second aspect, in a possible implementation, after the sending transmission feedback information, the method further includes:
receiving data retransmitted through the first spatial stream or a spatial stream other than the first spatial stream, where the retransmitted data is decoded and demodulated to obtain the first MPDU.

According to a third aspect, this application provides a communication apparatus, where the apparatus includes a transceiver module and a processing module.

The processing module is configured to obtain a modulation and coding scheme MCS corresponding to each of multiple spatial streams.

The transceiver module is configured to send data of the multiple spatial streams based on the MCS corresponding to each spatial stream.

With reference to the third aspect, in a possible implementation, before the sending data of the multiple spatial streams based on the MCS corresponding to each spatial stream, the transceiver module is further configured to:
send first indication information, where the first indication information includes a plurality of user fields, each of the plurality of user fields corresponds to one spatial stream, and each of the plurality of user fields is used to indicate an MCS of a corresponding spatial stream; or
the first indication information includes at least one user field, each of the at least one user field includes a plurality of user subfields, each of the plurality of user subfields corresponds to one spatial stream, and each of the at least one user field is used to indicate MCSs of the multiple spatial streams corresponding to the plurality of included user subfields.

Optionally, the first indication information is carried in signal field sig information.

With reference to the third aspect, in a possible implementation, the processing module is specifically configured to:
send a first message with reference to the transceiver module, where the first message is used to request to obtain a capability of a receiver, and the capability of the receiver includes a quantity of spatial streams receivable by the receiver device or an MCS range supported by the receiver device;
receive a feedback message with reference to the transceiver module, where the feedback message includes the capability of the receiver; and
determine, based on the capability of the receiver, the MCS corresponding to each of the multiple spatial streams.

Optionally, the first message is carried in a beacon frame or a probe response frame, and/or the feedback message is carried in a probe request frame or an association request frame.

With reference to the third aspect, in a possible implementation, the processing module is specifically configured to:
send a measurement frame with reference to the transceiver module, and receive a measurement result for the measurement frame, where the measurement result is used to represent channel quality of each of the multiple spatial streams; and determine, based on the measurement result, the MCS corresponding to each of the multiple spatial streams.

Optionally, the measurement result includes at least one of the following: a post signal-to-noise ratio SNR of each spatial stream channel, an element value of a channel gain matrix H, a singular value decomposition SVD result V of the channel gain matrix, compression information of H or V, and a matrix obtained by H based on a preset mapping relationship.

Optionally, each of the multiple spatial streams is used to send one or more MPDUs, and a length of the one or more MPDUs of each spatial stream is less than or equal to a bearer capability of each spatial stream.

With reference to the third aspect, in a possible implementation, MPDUs sent in different spatial streams in the multiple spatial streams correspond to different priorities, and reliability of each of the multiple spatial streams is in a positive correlation with a priority of the MPUD sent by each spatial stream; and/or the processing module adjusts the reliability of each spatial stream based on the priority of the MPDU sent by each of the multiple spatial streams, so that the reliability of each spatial stream is in the positive correlation with the priority of the MPUD sent by each spatial stream.

Optionally, the reliability of the spatial stream is improved by reducing the MCS of the spatial stream.

Optionally, the priority of the MPDU is determined based on a traffic identifier TID.

With reference to the third aspect, in a possible implementation, the transceiver module is further configured to receive transmission feedback information, where the transmission feedback information indicates that a first MPDU of a first spatial stream in the multiple spatial streams fails to be transmitted; and the processing module is further configured to retransmit the first MPDU through the first spatial stream or a spatial stream other than the first spatial stream with reference to the transceiver module.

With reference to the third aspect, in a possible implementation, the processing module is further configured to adjust, based on a transmission error rate corresponding to each of the multiple spatial streams, the MCS corresponding to each spatial stream.

With reference to the third aspect, in a possible implementation, the processing module is specifically configured to: increase an MCS of a single spatial stream in the multiple spatial streams if a transmission error rate of the single spatial stream is less than a first preset threshold, or decrease an MCS of a single spatial stream in the multiple spatial streams if the transmission error rate of the single spatial stream is greater than a second preset threshold.

According to a fourth aspect, this application provides a communication apparatus, where the apparatus includes a transceiver module and a processing module.

The transceiver module is configured to receive data of multiple spatial streams, where each of the multiple spatial streams corresponds to a different modulation and coding scheme MCS; and the processing module is configured to decode and demodulate data of each spatial stream based on the MCS corresponding to each spatial stream.

With reference to the fourth aspect, in a possible implementation, before receiving the data of the multiple spatial streams, the transceiver module is further configured to: receive first indication information, where the first indication includes a plurality of user fields, each of the plurality of user fields corresponds to one spatial stream, and each of the plurality of user fields is used to indicate an MCS of a corresponding spatial stream; or
the first indication information includes at least one user field, each of the at least one user field includes a plurality of user subfields, each of the plurality of user subfields corresponds to one spatial stream, and each of the at least one user field is used to indicate MCSs of the multiple spatial streams corresponding to the plurality of included user subfields; and the processing module is specifically configured to decode and demodulate the data of each spatial stream based on an MCS that is of a spatial stream and that is indicated by the first indication information.

Optionally, the first indication information is carried in signal field sig information.

With reference to the fourth aspect, in a possible implementation, before receiving the data of the multiple spatial streams, the transceiver module is further configured to: receive a first message, where the first message is used to request to obtain a capability of a receiver, and the capability of the receiver includes a quantity of spatial streams receivable by the receiver device or an MCS range supported by the receiver device; send a feedback message, where the feedback message includes the capability of the receiver.

Optionally, the first message is carried in a beacon frame or a probe response frame, and/or the feedback message is carried in a probe request frame or an association request frame.

With reference to the fourth aspect, in a possible implementation, before receiving the data of the multiple spatial streams, the transceiver module is further configured to: receive a measurement frame, and send a measurement result for the measurement frame, where the measurement result is used to represent channel quality of each of the multiple spatial streams.

Optionally, the measurement result includes at least one of the following: a post signal-to-noise ratio SNR of each spatial stream channel, an element value of a channel gain matrix H, a singular value decomposition SVD result V of the channel gain matrix, compression information of H or V, and a matrix obtained by H based on a preset mapping relationship.

Optionally, the data of each of the multiple spatial streams includes one or more MPDUs corresponding to each spatial stream.

Optionally, MPDUs sent in different spatial streams of the multiple spatial streams correspond to different priorities, and reliability of each spatial stream is in a positive correlation with a priority of an MPUD sent by each spatial stream.

With reference to the fourth aspect, in a possible implementation, the processing module is further configured to check the MPDU corresponding to each of the multiple spatial streams, to determine whether the MPDU is successfully checked; and
send transmission feedback information if a first MPDU corresponding to a first spatial stream in the multiple spatial streams fails to be checked, where the transmission feedback information indicates that the first MPDU corresponding to the first spatial stream is incorrectly transmitted.

With reference to the fourth aspect, in a possible implementation, the processing module is further configured to: after sending the transmission feedback information, receive data retransmitted through the first spatial stream or a spatial stream other than the first spatial stream, where the retransmitted data is decoded and demodulated to obtain the first MPDU.

According to a fifth aspect, this application provides a communication apparatus, where the communication apparatus is an AP device or a STA device, and the communication apparatus includes a processor, configured to perform the method shown in the first aspect or any one of the possible implementations of the first aspect. Alternatively, the processor is configured to execute a program stored in a memory. When the program is executed, the method according to the first aspect or any one of the possible implementations of the first aspect is performed.

With reference to the fifth aspect, in a possible implementation, the memory is located outside the foregoing communication apparatus.

With reference to the fifth aspect, in a possible implementation, the memory is located inside the foregoing communication apparatus.

In this application, the processor and the memory may be further integrated into one device, that is, the processor and the memory may be further integrated together.

According to a sixth aspect, this application provides a communication apparatus, where the communication apparatus is an AP device or a STA device, and the communication apparatus includes a processor, configured to perform the method shown in the second aspect or any one of the possible implementations of the second aspect. Alternatively, the processor is configured to execute a program stored in a memory. When the program is executed, the method according to the second aspect or any one of the possible implementations of the second aspect is performed.

With reference to the sixth aspect, in a possible implementation, the memory is located outside the foregoing communication apparatus.

With reference to the sixth aspect, in a possible implementation, the memory is located inside the foregoing communication apparatus.

In this application, the processor and the memory may be further integrated into one device, that is, the processor and the memory may be further integrated together.

According to a seventh aspect, this application provides a communication apparatus. The communication apparatus includes a logic circuit and an interface, and the logic circuit is coupled to the interface.

In a design, the logic circuit is configured to obtain a modulation and coding scheme MCS corresponding to each of multiple spatial streams; and the interface is configured to send data of the multiple spatial streams based on the MCS corresponding to each spatial stream.

In a design, the logic circuit is configured to perform other steps performed by the processing module in the first aspect, and the interface is configured to perform other steps performed by the transceiver module in the first aspect.

According to an eighth aspect, this application provides a communication apparatus. The communication apparatus includes a logic circuit and an interface, and the logic circuit is coupled to the interface.

In a design, the interface is configured to receive data of multiple spatial streams, where each of the multiple spatial streams corresponds to a different modulation and coding scheme MCS, and the logic circuit is configured to decode and demodulate data of each spatial stream based on the MCS corresponding to each spatial stream.

In a design, the logic circuit is configured to perform other steps performed by the processing module in the second aspect, and the interface is configured to perform other steps performed by the transceiver module in the second aspect.

According to a ninth aspect, an embodiment of this application provides a computer-readable storage medium. The computer-readable storage medium is configured to store a computer program, and when the computer program is run on a computer, the method in the first aspect or any one of the possible implementations of the first aspect is performed.

According to a tenth aspect, an embodiment of this application provides a computer-readable storage medium. The computer-readable storage medium is configured to store a computer program, and when the computer program is run on a computer, the method in the second aspect or any one of the possible implementations of the second aspect is performed.

According to an eleventh aspect, an embodiment of this application provides a computer program product. The computer program product includes a computer program or computer code, and when the computer program product runs on a computer, the method in the first aspect or any one of the possible implementations of the first aspect is performed.

According to a twelfth aspect, an embodiment of this application provides a computer program product. The computer program product includes a computer program or computer code, and when the computer program or the computer code is run on a computer, the method according to the second aspect or any one of the possible implementations of the second aspect is performed.

According to a thirteenth aspect, an embodiment of this application provides a computer program. When the computer program is run on a computer, the method in the first aspect or any one of the possible implementations of the first aspect is performed.

According to a fourteenth aspect, an embodiment of this application provides a computer program. When the computer program is run on a computer, the method in the second aspect or any one of the possible implementations of the second aspect is performed.

According to a fifteenth aspect, an embodiment of this application provides a wireless communication system. The wireless communication system includes the communication apparatus according to the third aspect or any possible implementation of the third aspect, and may further include the communication apparatus according to the fourth aspect or any possible implementation of the fourth aspect.

### BRIEF DESCRIPTION OF DRAWINGS

To describe technical solutions of embodiments of this application more clearly, the following briefly describes accompanying drawings for describing embodiments.
FIG. 1 is a diagram of a multi-antenna communication scenario according to an embodiment of this application;
FIG. 2 is a diagram of an implementation of a MIMO technology according to an embodiment of this application;
FIG. 3 is a diagram of a communication system according to an embodiment of this application;
FIG. 4A is a diagram of a modulation and coding scheme of a multi-stream system according to an embodiment of this application;
FIG. 4B is a diagram of another modulation and coding scheme of a multi-stream system according to an embodiment of this application;
FIG. 5 is a diagram of weakness effect of MCS allocation according to an embodiment of this application;
FIG. 6A is a flowchart of a multiple spatial stream transmission method according to an embodiment of this application;
FIG. 6B is a flowchart in which a transmitter device determines MCSs respectively corresponding to multiple spatial streams according to an embodiment of this application;
FIG. 6C is a diagram of a multiple spatial stream coding transmission manner according to an embodiment of this application;
FIG. 6D is a diagram of a format of a PPDU according to an embodiment of this application;
FIG. 6E is a diagram of a data transmission process according to an embodiment of this application;
FIG. 6F is a diagram of MPUD division according to an embodiment of this application;
FIG. 7 is a diagram of a structure of a communication apparatus according to an embodiment of this application;
FIG. 8 is a diagram of a structure of a communication apparatus 1000 according to an embodiment of this application; and
FIG. 9 is a diagram of another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In this application, the terms "first", "second", and so on are intended to distinguish between different objects but do not indicate a particular order of the objects. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In the descriptions of this application, "at least one (item) "means one or more, "a plurality of" means two or more, and "at least two (items)" means two, three, or more. In addition, the term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

In this application, the term "example", "for example", or the like is used to represent giving an example, an illustration, or a description. Any embodiment or design scheme described with "example", "in an example", or "for example" in this application should not be explained as being more preferred or having more advantages than another embodiment or design scheme. Exactly, use of the term "example", "in an example", "for example", or the like is intended to present a related concept in a specific manner.

In this application, an element represented in a singular form is intended to represent "one or more", but does not represent "one and only one", unless otherwise specified.

Methods provided in this application may be applied to a wireless local area network (wireless local area network, WLAN) system, for example, Wi-Fi. The method provided in this application may be applicable to the Institute of Electrical and Electronics Engineers (institute of electrical and electronics engineers, IEEE) 802.11 series protocols, and may be specifically applicable to a Wi-Fi protocol that supports a multiple-input multiple-output (multiple-input multiple-output, MIMO) technology, for example, 802.11n, 802.11ac, 802.11ax, 802.11ax, 802.11be, a next generation of 802.11be, and Wi-Fi 8, which are not listed one by one herein. The method provided in this application may be further applied to an ultra wide band (ultra wide band, UWB)-based wireless personal area network system, and a sensing system.

The following describes a system architecture in embodiments of this application with reference to figures.

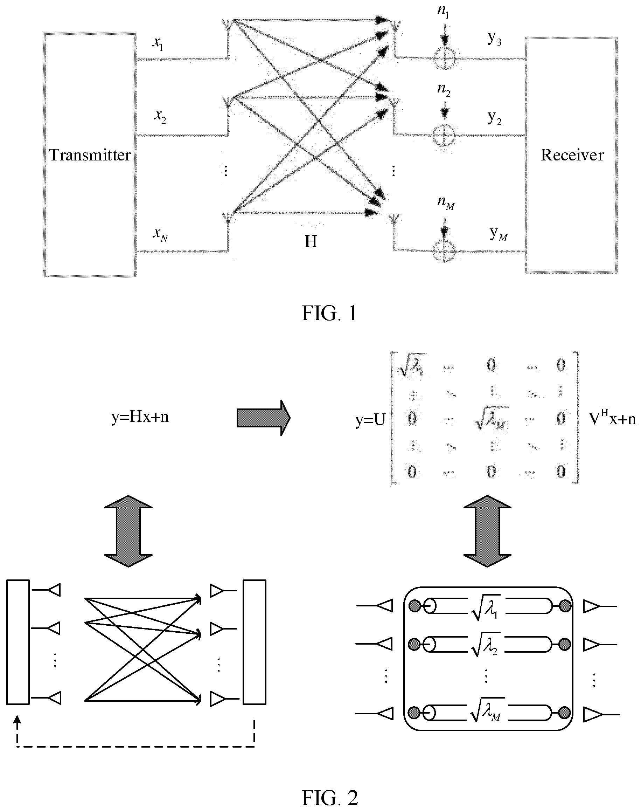

Multiple antennas may be disposed at a transmitter and a receiver for communication. FIG. 1 is a diagram of a multi-antenna communication scenario according to an embodiment of this application. As shown in FIG. 1, a transmitter device may include N antennas, a receiver device may include M antennas, and each antenna of the transmitter device may communicate with each antenna of the receiver device. In other words, the transmitter device and the receiver device include N*M transmission channels. Transmit signals respectively corresponding to the N antennas of the transmitter device are *x*₁, *x₂*... and *X_{N}*, noise corresponding to the M antennas of the receiver device is *n*₁, *n*₂... and *n_{M},* and receive signals respectively corresponding to the antennas of the receiver device are *y*₁, *y*₂... and *y_{M}* respectively. It should be noted that, for different transmission channels (different transmitter device antennas connected to the receiver device), received signals *y*₁, *y*₂, ... and *y_{M}* are different values.

The foregoing process may be represented according to a formula y=Hx+n, where y represents a signal of the receiver device, x represents a signal of the transmitter device, n represents antenna noise of the receiver device, and H represents a channel gain matrix. In other words, each element of the matrix is used to represent status parameters of different channels. In a conventional multi-antenna communication scenario, a signal sent by any transmit antenna may be received by any receive antenna. With the introduction of the MIMO technology, spatial multiplexing can be performed for multi-antenna transmission. That is, multiple independent transmission channels (channels), that is, spatial streams, are formed through joint processing at the transmitter and the receiver, to increase a channel capacity. FIG. 2 is a diagram of an implementation of a MIMO technology according to an embodiment of this application. As shown in FIG. 2, singular value decomposition (singular value decomposition, SVD) is performed on a matrix H in a multi-antenna communication scenario, that is, H=UλV^{H}, where U is an N*N matrix, λ is an N*M matrix, all elements other than a diagonal in the matrix are 0, and V^{H} is an M*M matrix. An original equation y=Hx+n is transformed into y=UλV^{H}x+n, and may be used to represent M independently transmitted channels. A channel gain of each channel corresponds to a diagonal element of the matrix λ.

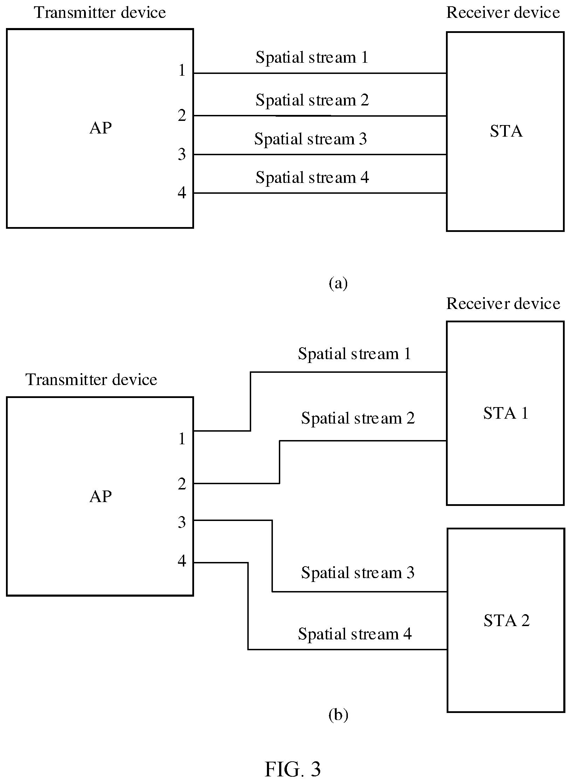

Further, FIG. 3 is a diagram of a communication system according to an embodiment of this application. As shown in (a) in FIG. 3, it is assumed that a transmitter device is an access point (access point, AP) and includes four spatial streams, the transmitter device may perform MIMO transmission with a receiver device through all spatial streams. The receiver device may be a non-access point (non-access point, non-AP), that is, a station (station, STA). In this case, the AP and the STA perform transmission through the four spatial streams. Alternatively, the transmitter device may perform MIMO transmission with one receiver device through some spatial streams of the transmitter device. For example, as shown in (b) in FIG. 3, the AP performs transmission with a STA 1 through a spatial stream 1 and a spatial stream 2, and the AP performs transmission with a STA 2 through a spatial stream 3 and a spatial stream 4. In addition, both the transmitter device and the receiver device may be APs or STAs, or the transmitter device is a STA, and the receiver device is an AP. This is not limited in embodiments of this application. The AP may refer to a wireless router, or may be a terminal device including a wireless routing function. The STA is a terminal device that does not have the wireless routing function. A terminal device (terminal equipment) may also be referred to as a terminal, user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

In addition, the AP device and the AP, and the STA device and the STA in embodiments of this application have a same meaning. Therefore, the AP device and the AP, and the STA device and the STA described in embodiments of this application may be replaced with each other. Details are not described below.

The following describes the conventional technology in embodiments of this application with reference to figures.

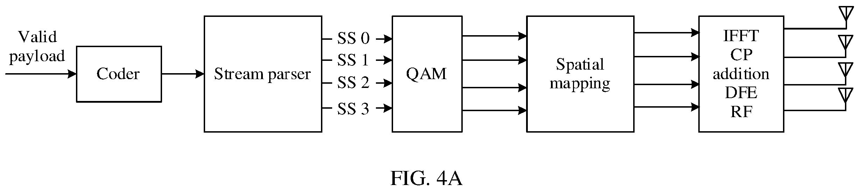

During multi-stream (spatial stream) transmission scheduling of a single user in a Wi-Fi system, protocols 802.11n, 802.11ac, 802.11ax, and 802.11be use unified coding for all streams, and use a same modulation scheme. FIG. 4A is a diagram of a modulation and coding scheme of a multi-stream system according to an embodiment of this application. As shown in FIG. 4A, a valid payload (usually divided in a unit of one frame of data) is first coded by using a coder. Then, a spatial stream (spatial stream, SS) is obtained by using a stream parser, corresponding to an SS 0 to an SS 4 in the figure. Then, modulation is performed in a unified quadrature amplitude modulation (quadrature amplitude modulation, QAM) manner, and then a series of processing is performed, for example, spatial mapping, inverse fast Fourier transform (inverse fast Fourier transform, IFFT), cyclic prefix (cyclic prefix, CP) addition, and digital front end (digital front end, DFE) signal processing, to obtain a radio frequency (radio frequency, RF) signal for sending.

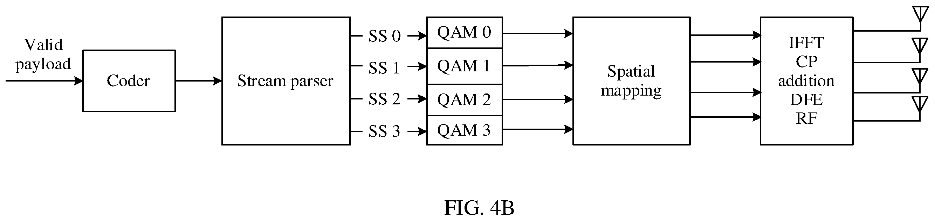

Alternatively, FIG. 4B is a diagram of another modulation and coding scheme of a multi-stream system according to an embodiment of this application. As shown in FIG. 4B, one frame of data is first coded by using a coder, multiple spatial streams corresponding to the frame of data are obtained by using a stream parser, and data of each spatial stream is modulated by using a different modulation scheme, corresponding to QAM 0 to QAM 3 in FIG. 4B. Then, a series of subsequent processing is performed, including spatial mapping, IFFT, CP addition, DFE, and the like, to obtain an RF signal for sending.

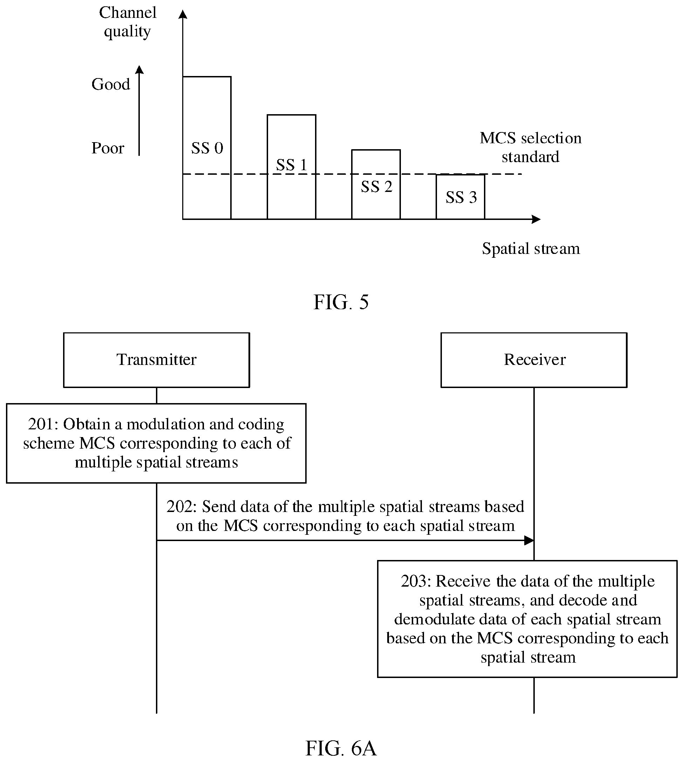

It can be learned that in the processes in FIG. 4A and FIG. 4B, the valid payload is first uniformly coded, and then sent. In this process, to ensure that data of all spatial streams can be normally sent, weakness effect exists when the transmitter device selects the MCS. FIG. 5 is a diagram of weakness effect of MCS allocation according to an embodiment of this application. As shown in FIG. 5, a transmitter device selects a unified modulation and coding scheme (modulation and coding scheme, MCS) (including a bit rate and QAM) based on a spatial stream with poorest channel quality in multiple spatial streams. As a result, a transmission capability of a spatial stream with good channel quality is not fully used, and a waste is caused. In addition, all spatial stream data is uniformly coded and allocated. Once a decoding error occurs on a receiver device, a stream at which an error part is located cannot be determined. This is unfavorable to adaptive MCS adjustment. In addition, all media access control protocol data units (media access control protocol data unit, MPDU) are allocated to each spatial stream by using a stream parser, that is, spatial streams allocated to MPDUs are not fixed, and a problem of cross-spatial-stream allocation may exist in a same MPDU. If a transmission error occurs due to inappropriate MCS allocation for a stream, all MPDUs may need to be retransmitted, and overheads are high.

Based on the foregoing description in the conventional technology, FIG. 6A is a flowchart of a multiple spatial stream transmission method according to an embodiment of this application. As shown in FIG. 6A, the method includes the following steps.

201: A transmitter device obtains a modulation and coding scheme MCS corresponding to each of multiple spatial streams.

The transmitter device and a receiver device in embodiments of this application are devices that can support transmission of the multiple spatial streams. As described above, the transmitter device may be an AP, or may be a STA. The receiver device may be an AP, or may be a STA. In embodiments of this application, an example in which the transmitter device is the AP and the receiver device is the STA is used for description.

In embodiments of this application, the transmitter device first determines the MCS corresponding to each spatial stream. Specifically, the MCS corresponding to each spatial stream is related to a capability of the receiver, and the capability of the receiver may include a quantity of spatial streams receivable by the receiver device, or an MCS range that can be supported by the receiver device. In addition, the MCS corresponding to each spatial stream is determined based on a capability of the transmitter device, including a quantity of spatial streams that can be sent by the transmitter device and an MCS range that can be supported by the transmitter device.

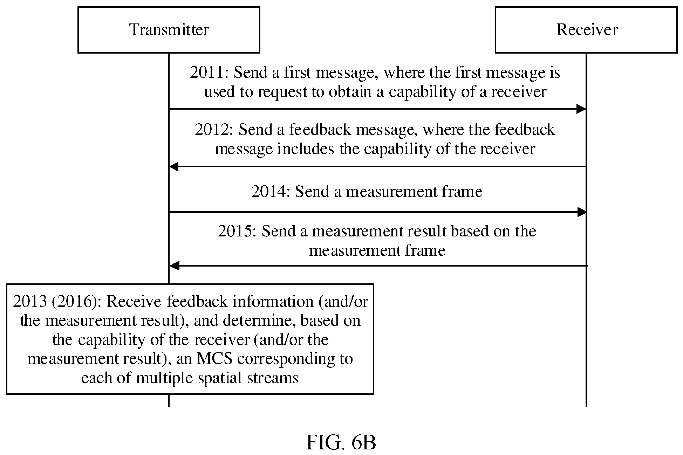

For details, FIG. 6B is a flowchart in which a transmitter device determines MCSs respectively corresponding to multiple spatial streams according to an embodiment of this application. As shown in FIG. 6B, the following steps are included.

2011: The transmitter device sends a first message, where the first message is used to request to obtain a capability of a receiver, and the capability of the receiver includes a quantity of spatial streams receivable by the receiver device or an MCS range supported by the receiver device. The first message may be carried in a beacon (beacon) frame, and the beacon frame is a frame periodically sent by the AP, and is used to notify another AP or STA of existence of the AP. Alternatively, the first message may be carried in the beacon frame. Alternatively, the first message may be carried in a probe response (probe response) frame. When the transmitter device is the AP, the receiver device STA sends a probe request (probe request) frame to the transmitter device AP, to request the transmitter device to send a probe frame to perform channel quality sounding. The transmitter device AP may send a probe response frame for the probe request frame, and the first message may be carried in the probe response frame.

2012: The receiver device sends a feedback message, where the feedback message includes the capability of the receiver. After receiving the first message, the receiver device may send the feedback message, to indicate the capability of the receiver. It is assumed that the first message is carried in the beacon frame. The feedback message may be carried in the probe request frame or an association request (association request) frame. Because both the probe request frame and the association request frame are frames sent after the receiver device receives the beacon frame. It is assumed that the first message is carried in the probe response frame. The feedback message may be carried in the association request frame. This is because the association request frame is a frame sent after the receiver device receives the probe response frame.

2013: The transmitter device receives the feedback information, and determines, based on the capability of the receiver, the MCS corresponding to each of the multiple spatial streams. The transmitter device receives the feedback information. Because the capability of the receiver includes the quantity of spatial streams receivable by the receiver device or the MCS range supported by the receiver device (usually both types of information are included), the transmitter device may determine, based on the capability of the receiver and the capability of the transmitter device, a quantity of spatial streams allocated to the transmitter device, a location (corresponding to which spatial stream) of a spatial stream, an MCS of the spatial stream, and the like.

For example, it is assumed that a correspondence between the multiple spatial streams of the transmitter device AP and the MCS of each spatial stream may be shown in Table 1.

**Table 1**

| AP | STA 1 | STA 2 | MCS |
|---|---|---|---|
| (four spatial streams are supported, and a supported MCS index ranges from 0 to 7.) | (two spatial streams are supported, and a supported MCS index ranges from 0 to 6.) | (three spatial streams are supported, and a supported MCS index ranges from 0 to 7.) | |
| Spatial stream 1 | | √ | 7 |
| Spatial stream 2 | | √ | 6 |
| Spatial stream 3 | √ | | 6 |
| Spatial stream 4 | √ | | 5 |

It can be learned from Table 1 that, in the four spatial streams of the transmitter device, the spatial stream 1 and the spatial stream 2 are used to send data to the STA 2, and MCSs corresponding to the spatial stream 1 and the spatial stream 2 are respectively an MCS (modulation scheme: 64-QAM, rate: 65.0 Mb/s) of an index 7 and an MCS of an index 6 (modulation scheme: 64-QAM, rate: 58.5 Mb/s). The spatial stream 3 and the spatial stream 4 are used to send data to the STA 1, and MCSs corresponding to the spatial stream 3 and the spatial stream 4 are respectively the MCS of an index 6 and an MCS of an index 5 (modulation scheme: 64-QAM, rate: 52.0 Mb/s).

It can be learned that in embodiments of this application, capability negotiation is performed between the transmitter device and the receiver, so that the transmitter device determines, based on the capability of the receiver, a quantity of spatial streams, a location of a spatial stream, and the MCS of each spatial stream that are allocated to the receiver device. In this way, the transmitter device can send spatial stream data to the receiver device by using a more accurate MCS, and a bearer capability of each spatial stream that communicates with the receiver device is fully utilized. This effectively improves a throughput capability of a communication system.

It should be noted that both the transmitter device and the receiver device in embodiments of this application are devices that have a capability of supporting transmission of the multiple spatial streams by using different MCSs. This capability may be a default capability of the transmitter device and the receiver device, or may be a capability determined after the transmitter device and the receiver device perform negotiation. This is not specifically limited in embodiments of this application.

In an optional case, as shown in FIG. 6B, a process in which the transmitter device determines the MCS corresponding to each spatial stream includes the following steps.

2014: The transmitter device sends a measurement frame. The measurement frame sent by the transmitter device may also be referred to as a sounding reference signal (sounding reference signal, SRS), which is a data frame whose content is known to both the transmitter and the receiver. The receiver device may determine channel quality of a spatial stream (a transmission channel) by comparing the received data frame with a data frame whose content is known.

2015: The receiver device receives the measurement frame, and sends a measurement result based on the measurement frame, where the measurement result is used to represent channel quality of each of the multiple spatial streams. The receiver device determines the measurement result based on the measurement frame, that is, the channel quality of each spatial stream in the spatial streams. Specifically, the channel quality may be represented by using one or more of the following information, that is, sent to the transmitter device as the measurement result: a post (post) signal-to-noise ratio SNR of each spatial stream channel, an element value of a channel gain matrix H, a singular value decomposition SVD result V of the channel gain matrix, compression information of H or V, and information like a matrix obtained by H based on a preset mapping relationship. H may be H described in the foregoing formula y=Hx+n, and V is V in H=UλV^{H}. Alternatively, to reduce consumption of transmission resources, H or V may be compressed, and the sent measurement result is compressed information of H or V Alternatively, H may be mapped based on the preset mapping relationship. For example, H is mapped to two square arrays that respectively meet a same quantity of rows and columns, and then the two square arrays are sent to the transmitter device as measurement results.

2016: The transmitter device receives the measurement result, and determines, based on the measurement result, the MCS corresponding to each of the multiple spatial streams.

After receiving the measurement result, the transmitter device may determine a quantity of spatial streams receivable by the receiver device (channel quality of several channels is fed back, that is, corresponding to several spatial streams that can be received) and the channel quality of each spatial stream, and may further determine the MCS that can be set for each spatial stream.

It can be learned that in embodiments of this application, the transmitter device sends the measurement frame to the receiver device, to measure channel quality between the transmitter device and the receiver device, so that the transmitter device can determine, based on a real-time channel measurement result, a quantity of spatial streams that can be supported by the receiver device and channel quality corresponding to each spatial stream. Further, the MCS corresponding to each spatial stream is configured for the receiver device, so that the transmitter device can send the spatial stream data to the receiver device by using the more accurate MCS, and the bearer capability of each spatial stream that communicates with the receiver device is fully utilized. This effectively improves the throughput capability of the communication system.

In a possible case, a process of sending the probe frame to perform channel quality measurement and a process of obtaining the capability of the receiver can be implemented in combination. In other words, in step 2013, step 2014 to step 2016 are performed after the transmitter device receives the feedback information. The transmitter device determines, based on the feedback information of the receiver device and the measurement result, the MCS that is set for each spatial stream of the receiver device. In this manner, the MCS of each spatial stream can be more accurately determined with reference to the capability of the receiver and real-time channel quality of the receiver device and the transmitter device. This further improves a throughput of a communication system when data is sent based on the MCS of each spatial stream, and reduces a transmission error probability.

202: The transmitter device sends data of the multiple spatial streams based on the MCS corresponding to each spatial stream.

After determining the MCS corresponding to each spatial stream, the transmitter device may send the data based on the MCS corresponding to each spatial stream. The multiple spatial streams implement spatial multiplexing. It is assumed that some spatial streams in the multiple spatial streams of the transmitter device correspond to a receiver device STA 1, and the other spatial streams correspond to a receiver device STA 2. The transmitter device may separately send data to the STA 1 and the STA 2 by using different spatial streams at the same time.

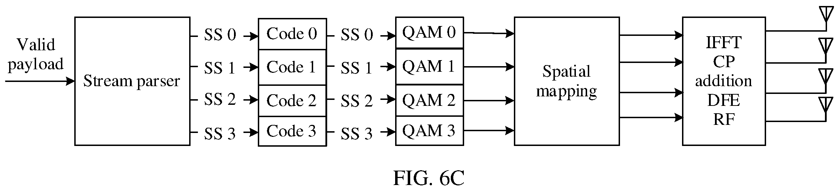

For details, refer to FIG. 6C. FIG. 6C is a diagram of a multiple spatial stream coding transmission manner according to an embodiment of this application. As shown in FIG. 6C, in embodiments of this application, a stream parser parses a valid payload into several pieces of spatial stream data. A specific quantity of spatial streams is determined based on a quantity of spatial streams of the receiver device corresponding to the valid payload. For example, if the transmitter device learns that spatial streams allocated to a STA 0 are a spatial stream 0 to a spatial stream 3, the stream parser parses a valid payload to be sent to the STA 0 into data of four spatial streams, and performs coding (a manner) 0 to coding (a manner) 3 based on an MCS 0 to an MCS 3 corresponding to each spatial stream. Then, the data of the four spatial streams is modulated based on the modulation schemes MCS 0 to MCS 3, that is, a modulation scheme (QAM) 0 to a modulation scheme 3 corresponding to each spatial stream. Then, subsequent spatial mapping and signal processing such as IFFT are performed to obtain a radio frequency signal for sending.

It should be noted that the coding scheme in the MCS refers to a code rate, and does not include a specific coding type. Optionally, each spatial stream may further correspond to a different coding type (coding). The coding type may be, for example, a low density parity check code (low density parity check code, LDPC) or a binary convolutional code (binary convolutional code, BCC). A manner and a process of determining the coding type may be the same as the foregoing manner and process of determining the MCS of each spatial stream. Alternatively, after the MCS of each spatial stream is determined, the corresponding coding type may be determined based on the MCS. A specific manner is not limited in this application.

After obtaining the MCS corresponding to each spatial stream (the coding type corresponding to each spatial stream may be further included, this description is general in content of the following embodiments, and details are not described subsequently), the transmitter device may send the MCS to the receiver device by using the first indication information. In this way, the receiver device can learn how to demodulate and decode the received spatial stream data. Content of the first indication information may include content in Table 2.

**Table 2**

| Target user | User field | Spatial stream | MCS |
|---|---|---|---|
| STA 1 | U1 | Spatial stream 1 | 7 |
| | U2 | Spatial stream 2 | 6 |

It can be learned from Table 2 that the first indication information may indicate a target user, that is, the receiver device, and may be specifically implemented by indicating an identifier (ID) of a STA, which is the STA 1 in this embodiment. Then, the first indication information indicates a plurality of user fields (user field) corresponding to the target user, including U1 and U2, and MCSs of spatial streams respectively corresponding to U1 and U2. Optionally, the first indication information may alternatively indicate a transmitter device identifier or an address of the transmitter device.

Alternatively, the first indication information may include content in Table 3.

**Table 3**

| Target user | User field | User subfield | Spatial stream | MCS |
|---|---|---|---|---|
| STA 1 | U0 | U01 | Spatial stream 1 | 7 |
| | | U02 | Spatial stream 2 | 6 |

A difference between Table 3 and Table 2 lies in that a user field corresponding to a same target user STA 1 indicated by the first indication information corresponding to Table 3 is a user field U0, and the user field U0 may correspond to MCSs of the multiple spatial streams. Alternatively, the user field U0 includes a plurality of user subfields U01 and U02, and each user subfield corresponds to an MCS of one spatial stream.

Optionally, the first indication information may be carried in signal field (signal field, sig for short) information.

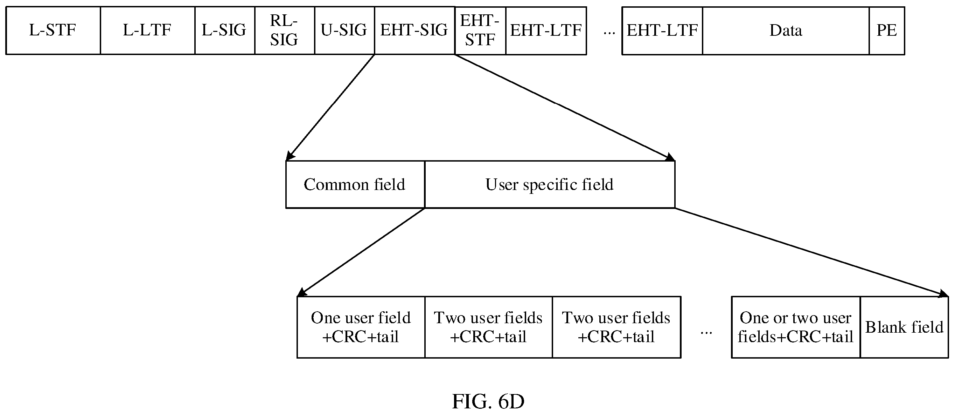

FIG. 6D is a diagram of a format of a PPDU according to an embodiment of this application. FIG. 6D shows a frame structure of an extremely high throughput (very high throughput, EHT) multi-user (multi-user, MU) physical layer protocol data unit (physical layer protocol data unit, PPDU), including a (non-ultra-high throughput) short training sequence (non-HT short training field, L-STF) and a (non-ultra-high throughput) long training sequence (non-HT long training field, L-LTF) for synchronization, and further including a non-high throughput signal field (non-HT signal field, L-SIG), a repeated non-high throughput signal field (repeated non-HT signal field, RL-SIG), an universal signal field (universal signal field, U-SIG), an extremely high throughput signal field (extremely high throughput signal field, EHT-SIG), an extremely high throughput short training sequence (EHT short training field, EHT-SIF), an extremely high throughput short training sequence (EHT long training field, EHT-LTF), and a data and packet extension field (packet extension field, PE).

The sig information that is used to carry the first indication information and that is described in embodiments of this application may be the EHT-SIG in the figure. The EHT-SIG includes a common field (common field) and a user specific field (user specific field). A universal field is used to bear common information of all users of the transmitter device, for example, broadband information. A user specific field is used to carry information specific to each user. The user specific field includes a divided user field (which further includes cyclic redundancy check (cyclic redundancy check, CRC) information and a tail), or a user coding block corresponding to the user field. Fields specifically included in the user field include (STA-ID, MCS, coding type, spatial configuration), and the like. The transmitter device adds a same STA-ID field to different user fields, so that a target user corresponding to the STA-ID corresponds to a multi-purpose user field. Then, different spatial configuration fields are added to each user field, so that each user field corresponds to a different spatial stream, and the MCS field is used to indicate the MCS corresponding to the spatial stream.

It is assumed that a plurality of user subfields in the user field correspond to the multiple spatial streams and the MCS of each spatial stream. A spatial configuration field of the user field may include a plurality of spatial stream identifiers and the MCS corresponding to each spatial stream. Alternatively, a dedicated spatial subfield field may be further included, and is used to correspond to each spatial stream identifier and the MCS of the spatial stream.

In embodiments of this application, the MCS corresponding to each spatial stream is sent to the receiver device by using the first indication information, so that the receiver device can determine, based on the first indication information, the MCS corresponding to each spatial stream, and quickly demodulate and decode data of each spatial stream in a correct manner. Demodulation and decoding efficiency and accuracy are improved.

Further, in the multiple spatial stream coding and transmission process shown in FIG. 6C, the valid payload needs to be first parsed by using the stream parser, to obtain data corresponding to several spatial streams. Because there is a difference from a conventional multiple spatial stream coding and transmission process, a processing process of the stream parser is also different.

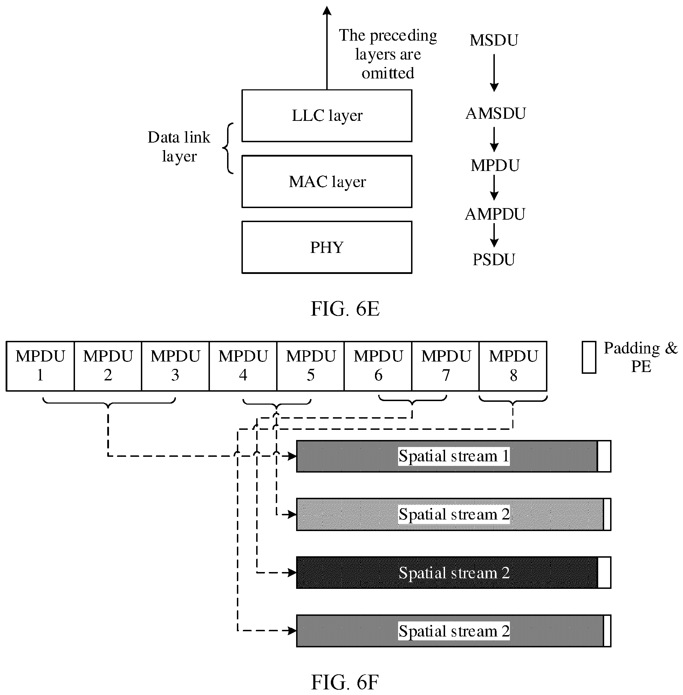

Specifically, FIG. 6E is a diagram of a data transmission process according to an embodiment of this application. As shown in FIG. 6E, in an open system interconnect reference model (open system interconnect, OSI), a bottom layer is a physical layer (physical, PHY), and a data link layer is above the bottom layer. The data link layer may be further divided into a media access control (media access control, MAC) layer and a logical link control (logical link control, LLC) layer. When data is in the MAC layer, the data exists in a form of a MAC service data unit (MAC service data units, MSDU). Before entering the MAC layer, the MSDU performs aggregation to obtain an aggregate MSDU (aggregate MSDU, A-MSDU). The A-MSDU is input to the MAC layer, and is divided to obtain a media access control protocol data unit (media access control protocol data unit, MPDU). The MAC layer aggregates the MPDU to obtain an aggregate MPDU (aggregate MPDU, A-MPDU). So that a long physical layer service frame (physical service data units, PSDU) is input to the PHY.

The A-MSDU and the A-MPDU have the following features: For the A-MSDU, if errors occur in some subframes in an entire frame, the entire frame needs to be retransmitted. However, the A-MPDU only needs to retransmit an incorrect part of subframes. One purpose of separately coding and modulating data of the multiple spatial streams is to enable only incorrect spatial stream data to be retransmitted when an error occurs in data transmission of a single spatial stream. Therefore, division of spatial stream data may be determined as division of MPDUs of each spatial stream.

Specifically, the MCS of each spatial stream and a physical layer frame length of each spatial stream, that is, physical channel transmission duration, may be first obtained, and then an amount of data that can be transmitted in each spatial stream within corresponding transmission duration may be determined based on a bit rate in the MCS and the physical layer frame length. Then, MPUD division may be performed.

Because the MPUD of each spatial stream is independently sent, and may need to be independently retransmitted subsequently, during MPDU division, each MPDU needs to be divided into one spatial stream for transmission, and cannot be transmitted across spatial streams. Therefore, during MPDU division, a length of a single MPUD cannot be greater than a bearer capability of a spatial stream used to carry the MPUD.

FIG. 6F is a diagram of MPUD division according to an embodiment of this application. As shown in FIG. 6F, it is assumed that each MPUD is divided into a same length, and a spatial stream 3 can carry a minimum amount of data. Therefore, the spatial stream 3 is used as a reference, and a frame of data is divided into an MPDU 1 to an MPUD 8, where all of the MPUDs have a same size. Then, the spatial stream 3 is used to transmit data of the MPDU 8, a spatial stream 2 is used to transmit data of the MPDU 6 and the MPDU 7, a spatial stream 1 is used to transmit data of the MPDU 4 and the MPDU 5, and a spatial stream 0 is used to transmit data of the MPUD 1 to the MPUD 3. The MPUD transmitted on each spatial stream in the figure may include a padding field (padding), so that frame lengths of different spatial streams are aligned. Alternatively, the spatial stream may further include a PE, and the PE is configured to increase duration of occupying an air interface, to obtain some data processing time for the receiver.

Alternatively, the MPDUs may be divided based on a bearer capability of each spatial stream, and lengths of the MPDUs are different. For example, the spatial stream 0 has a strongest bearer capability and is used to transmit data of an MPDU 01, and the spatial stream 3 has a weakest bearer capability and is used to transmit data of an MPDU 03. A length of the MPDU 01 is greater than a length of the MPDU 03.

Alternatively, a combination of the foregoing two division manners may be used. To be specific, lengths of different MPUDs may be different or may be the same. Data corresponding to one MPDU or data corresponding to a plurality of MPDUs may be transmitted on a same spatial stream. A principle followed is that a same MPDU is not transmitted across spatial streams.

In the foregoing process of dividing the MPUD, a problem of a bearer capability of a spatial stream is considered. On the other side, reliability of spatial streams may be further considered. More important data (with a higher priority) may be transmitted by using a spatial stream with higher reliability, to avoid a transmission error, avoid causing a security problem, or avoid affecting subsequent work.

Specifically, it is assumed that MPDUs correspond to different priorities. When an MPDU of each spatial stream is divided, reliability of each spatial stream may be in a positive correlation with a priority of an MPUD sent in each spatial stream. That is, higher reliability of a spatial stream indicates a higher priority of an MPUD sent in the spatial stream.

Alternatively, when the MPDU of each spatial stream is divided, the MPDU is first divided into each spatial stream based on a data sequence, and then the reliability of each spatial stream is adjusted based on the priority of the MPDU on each spatial stream, so that the reliability of each spatial stream may be in the positive correlation with the priority of an MPUD sent in each spatial stream. The reliability of the spatial stream may be reflected by using the MCS corresponding to the spatial stream. A higher MCS indicates lower reliability of the spatial stream. Therefore, the MCS can be decreased to improve the reliability of spatial stream.

The priority of the MPDU may be determined based on a traffic identifier (traffic identifier, TID). Generally, the TID is used to identify an MSDU at an upper layer of the MAC layer. When a value of the TID ranges from 0 to 7, the TID is used to identify a traffic type. For example, when TIDs are 4 and 5, the TIDs are used to identify that the MSDU corresponds to video data. When the TIDs are 6 and 7, the TIDs are used to identify that the MSDU corresponds to audio data. Generally, a priority of the audio data is higher than a priority of the video data. Therefore, priorities of the MSDUs whose TIDs are 6 and 7 are higher than priorities of the MSDUs whose TIDs are 4 and 5. The MPDU includes the MSDU, and a priority of the MPDU may be correspondingly determined based on a priority of the MSDU corresponding to the MPDU.

It can be learned that in embodiments of this application, the data corresponding to the spatial stream is divided based on the bearer capability of the spatial stream, so that each spatial stream can fully use the bearer capability of the spatial stream. This avoids a problem that the transmission capability of a spatial stream with good channel quality cannot be fully used due to weakness effect, and improves a system throughput. In addition, the size of the MPDU is divided based on the bearer capability of each spatial stream, so that data carried in each spatial stream can be independent, and the transmitter device can independently send the data of the spatial stream after an error occurs in decoding and demodulating the data of the spatial stream by the receiver device. Data scheduling flexibility of the transmission system is improved, and power consumption that may be caused by data retransmission is reduced.

203: The receiver device receives the data of the multiple spatial streams, and decodes and demodulates the data of each spatial stream based on the MCS corresponding to each spatial stream.

After receiving the data of the multiple spatial streams, the receiver device may demodulate and decode, based on the MCS corresponding to each spatial stream, the data transmitted in each spatial stream, to obtain the MPDU in the spatial stream. A manner in which the receiver device learns of the MCS corresponding to each spatial stream may be determined based on the first indication information sent by the transmitter device.

After obtaining the MPDU in each spatial stream through decoding and demodulation, the receiver device may check the MPDU, specifically, for example, perform CRC check. After obtaining a check result, the receiver device may send feedback information to the transmitter device, to indicate the check result. For example, the receiver device sends the feedback information to the transmitter device, to indicate that a first MPDU in a first spatial stream fails to be transmitted (or fails to be checked). The feedback information may be specifically carried in block acknowledgment (block ACK) information.

After receiving the feedback information, the receiver device may retransmit the first MPDU. Specifically, a first MPDU may be retransmitted through the first spatial stream originally used to transmit the first MPUD, or may be retransmitted through another MPDU other than the first spatial stream in the multiple spatial streams allocated by the transmitter device to the receiver device. For example, the transmitter device may retransmit the first MPDU through a second spatial stream.

Further, the MCS corresponding to each spatial stream may also be adjusted based on a transmission error rate corresponding to each of the multiple spatial streams. An MCS of a single spatial stream in the multiple spatial streams is increased if a transmission error rate of the single spatial stream is less than a first preset threshold, or an MCS of a single spatial stream in the multiple spatial streams is decreased if the transmission error rate of the single spatial stream is greater than a second preset threshold. The first preset threshold may be, for example, 10%, and the second preset threshold may be, for example, 20%. Alternatively, the first preset threshold and the second preset threshold may be equal, and both are 10%.

For the foregoing example, it is assumed that the transmitter device learns that an error occurs in transmission of the first MPDU of the first spatial stream, and a transmission error rate of the first spatial stream is higher than the second preset threshold. The transmitter device may decrease the MCS of the first spatial stream, to improve transmission reliability of the first spatial stream, and then retransmit the first MPDU through the first spatial stream.

It can be learned that in embodiments of this application, different modulation and coding schemes are configured for each of the multiple spatial streams, so that the data corresponding to each spatial stream can be independently coded, modulated, and transmitted. In this way, a bearer capability of each spatial stream is fully utilized, and a system throughput is improved. In addition, because data of a single spatial stream can be independently decoded, a receiver device may request the transmitter device to independently retransmit the data of the single spatial stream, thereby improving spatial stream scheduling flexibility.

The foregoing content describes in detail the method provided in this application. To facilitate implementation of the foregoing solutions in embodiments of this application, embodiments of this application further provide corresponding apparatuses or devices.

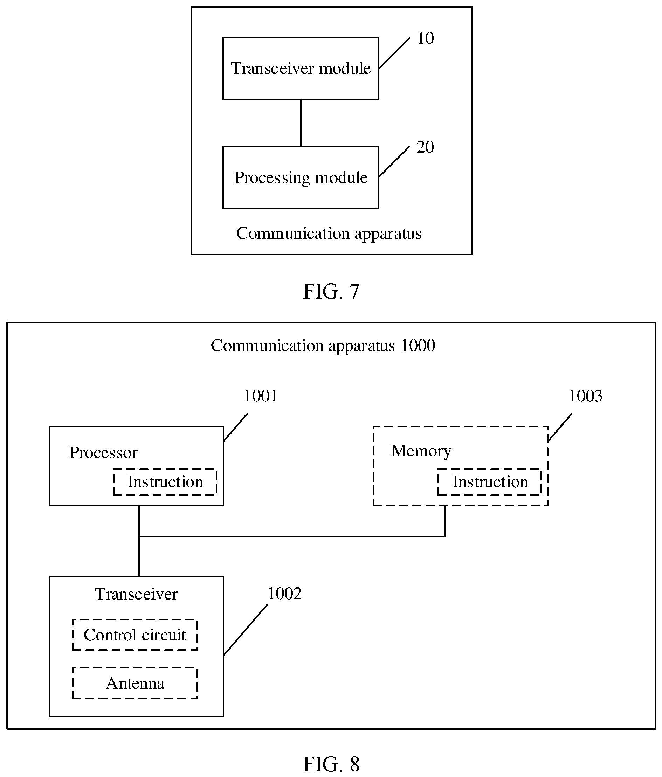

FIG. 7 is a diagram of a structure of a communication apparatus according to an embodiment of this application. As shown in FIG. 7, the communication apparatus includes a transceiver module 10 and a processing module 20.

In some embodiments of this application, the communication apparatus may be configured to perform the steps or functions performed by the transmitter device in the embodiments described in FIG. 6A to FIG. 6B. Details are as follows.

The processing module 20 is configured to obtain a modulation and coding scheme MCS corresponding to each of multiple spatial streams.

The transceiver module 10 is configured to send data of the multiple spatial streams based on the MCS corresponding to each spatial stream.

For example, before sending the data of the multiple spatial streams based on the MCS corresponding to each spatial stream, the transceiver module 10 is further configured to: send first indication information, where the first indication information includes a plurality of user fields, each of the plurality of user fields corresponds to one spatial stream, and each of the plurality of user fields is used to indicate an MCS of a corresponding spatial stream; or the first indication information includes at least one user field, each of the at least one user field includes a plurality of user subfields, each of the plurality of user subfields corresponds to one spatial stream, and each of the at least one user field is used to indicate MCSs of the multiple spatial streams corresponding to the plurality of included user subfields.

For example, the first indication information is carried in signal field sig information.

For example, the processing module 20 is specifically configured to: send a first message with reference to the transceiver module 10, where the first message is used to request to obtain a capability of a receiver, and the capability of the receiver includes a quantity of spatial streams receivable by the receiver device or an MCS range supported by the receiver device;
receive a feedback message with reference to the transceiver module 10, where the feedback message includes the capability of the receiver; and
determine, based on the capability of the receiver, the MCS corresponding to each of the multiple spatial streams.

For example, the first message is carried in a beacon frame or a probe response frame, and/or the feedback message is carried in a probe request frame or an association request frame.

For example, the processing module 20 is specifically configured to:
send a measurement frame with reference to the transceiver module 10, and receive a measurement result for the measurement frame, where the measurement result is used to represent channel quality of each of the multiple spatial streams; and determine, based on the measurement result, the MCS corresponding to each of the multiple spatial streams.

For example, the measurement result includes at least one of the following: a post signal-to-noise ratio SNR of each spatial stream channel, an element value of a channel gain matrix H, a singular value decomposition SVD result V of the channel gain matrix, compression information of H or V, and a matrix obtained by H based on a preset mapping relationship.

For example, each of the multiple spatial streams is used to send one or more MPDUs, and a length of the one or more MPDUs of each spatial stream is less than or equal to a bearer capability of each spatial stream.

For example, the MPDUs sent in different spatial streams in the multiple spatial streams correspond to different priorities, and reliability of each of the multiple spatial streams is in a positive correlation with a priority of the MPUD sent by each spatial stream; and/or the processing module 20 adjusts the reliability of each spatial stream based on the priority of the MPDU sent by each of the multiple spatial streams, so that the reliability of each spatial stream is in the positive correlation with the priority of the MPUD sent by each spatial stream.

For example, the reliability of the spatial stream is improved by reducing the MCS of the spatial stream.

For example, the priority of the MPDU is determined based on a traffic identifier TID.

For example, the transceiver module 10 is further configured to receive transmission feedback information, where the transmission feedback information indicates that a first MPDU of a first spatial stream in the multiple spatial streams fails to be transmitted; and the processing module 20 is further configured to retransmit the first MPDU through the first spatial stream or a spatial stream other than the first spatial stream with reference to the transceiver module 10.

For example, the processing module 20 is further configured to adjust, based on a transmission error rate corresponding to each of the multiple spatial streams, the MCS corresponding to each spatial stream.

For example, the processing module 20 is specifically configured to: increase an MCS of a single spatial stream in the multiple spatial streams if a transmission error rate of the single spatial stream is less than a first preset threshold, or decrease an MCS of a single spatial stream in the multiple spatial streams if the transmission error rate of the single spatial stream is greater than a second preset threshold.

It may be understood that specific descriptions of the transceiver module and the processing module shown in embodiments of this application are merely examples. For specific functions, performed steps, or the like of the transceiver module and the processing module, refer to the foregoing method embodiments (related descriptions in FIG. 6A to FIG. 6F). Details are not described herein again.

FIG. 7 is reused. In some other embodiments of this application, the communication apparatus may be configured to perform the steps or functions performed by the transmitter device in the embodiments described in FIG. 6A to FIG. 6B. Details are as follows.

The transceiver module 10 is configured to receive data of multiple spatial streams, where each of the multiple spatial streams corresponds to a different modulation and coding scheme MCS; and the processing module 20 is configured to decode and demodulate data of each spatial stream based on the MCS corresponding to each spatial stream.

For example, before receiving the data of the multiple spatial streams, the transceiver module 10 is further configured to: receive first indication information, where the first indication includes a plurality of user fields, each of the plurality of user fields corresponds to one spatial stream, and each of the plurality of user fields is used to indicate an MCS of a corresponding spatial stream; or
the first indication information includes at least one user field, each of the at least one user field includes a plurality of user subfields, each of the plurality of user subfields corresponds to one spatial stream, and each of the at least one user field is used to indicate MCSs of the multiple spatial streams corresponding to the plurality of included user subfields; and the processing module 20 is specifically configured to decode and demodulate the data of each spatial stream based on an MCS that is of a spatial stream and that is indicated by the first indication information.

For example, the first indication information is carried in signal field sig information.

For example, before receiving the data of the multiple spatial streams, the transceiver module 10 is further configured to: receive a first message, where the first message is used to request to obtain a capability of a receiver, and the capability of the receiver includes a quantity of spatial streams receivable by the receiver device or an MCS range supported by the receiver device; send a feedback message, where the feedback message includes the capability of the receiver.

For example, the first message is carried in a beacon frame or a probe response frame, and/or the feedback message is carried in a probe request frame or an association request frame.

For example, before receiving the data of the multiple spatial streams, the transceiver module 10 is further configured to: receive a measurement frame, and send a measurement result for the measurement frame, where the measurement result is used to represent channel quality of each of the multiple spatial streams.

For example, the measurement result includes at least one of the following: a post signal-to-noise ratio SNR of each spatial stream channel, an element value of a channel gain matrix H, a singular value decomposition SVD result V of the channel gain matrix, compression information of H or V, and a matrix obtained by H based on a preset mapping relationship.

For example, the data of each of the multiple spatial streams includes one or more MPDUs corresponding to each spatial stream.

For example, MPDUs sent in different spatial streams of the multiple spatial streams correspond to different priorities, and reliability of each spatial stream is in a positive correlation with a priority of an MPUD sent by each spatial stream.

For example, the processing module 20 is further configured to: check the MPDU corresponding to each of the multiple spatial streams, to determine whether the MPDU is successfully checked; and
send transmission feedback information if a first MPDU corresponding to a first spatial stream in the multiple spatial streams fails to be checked, where the transmission feedback information indicates that the first MPDU corresponding to the first spatial stream is incorrectly transmitted.

For example, the processing module 20 is further configured to: after sending the transmission feedback information, receive data retransmitted through the first spatial stream or a spatial stream other than the first spatial stream, where the retransmitted data is decoded and demodulated to obtain the first MPDU.

It may be understood that specific descriptions of the transceiver unit and the processing unit shown in embodiments of this application are merely examples. For specific functions, performed steps, or the like of the transceiver unit and the processing unit, refer to the foregoing method embodiments (related descriptions in FIG. 6A to FIG. 6F). Details are not described herein again.

The foregoing describes the transmitter device and the receiver device in embodiments of this application. The following describes possible product forms of the transmitter device and the receiver device. It should be understood that any product having a function of the transmitter device in FIG. 7 or any product having a function of the receiver device in FIG. 7 falls within the protection scope of embodiments of this application. It should be further understood that the following description is merely an example, and product forms of the transmitter device and the receiver device in embodiments of this application are not limited thereto.

FIG. 8 is a diagram of a structure of a communication apparatus 1000 according to an embodiment of this application. The communication apparatus 1000 may be a transmitter device, a receiver device, or a chip in the transmitter device or the receiver device. FIG. 8 shows only main components of the communication apparatus 1000. In addition to a processor 1001 and a transceiver 1002, the communication apparatus may further include a memory 1003 and an input/output apparatus (which is not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

In a design, the communication apparatus 1000 may be configured to perform functions of the transmitter device in the foregoing method embodiments. The processor 1001 may be configured to perform step 201 in FIG. 6A of obtaining an MCS corresponding to each of multiple spatial streams. The transceiver 1002 may be configured to perform step 202 in FIG. 6A of sending data of multiple spatial streams based on the MCS corresponding to each spatial stream, and the like, and/or another process of the technology described in this specification.

In another design, the communication apparatus 1000 may be configured to perform functions of the receiver device in the foregoing method embodiments. The transceiver 1002 may be configured to perform step 203 of receiving data of multiple spatial streams in FIG. 6A, and the processor 1001 may be configured to perform step 203 of decoding and demodulating the data of each spatial stream based on the MCS corresponding to each spatial stream in FIG. 6A, and/or another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in the foregoing method embodiments. The computer program may be fixed in the processor 1001. In this case, the processor 1001 may be implemented by hardware.

In an implementation, the communication apparatus 1000 may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 8. The communication apparatus may be an independent device or may be a part of a large device. For example, the communication apparatus may be:
(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

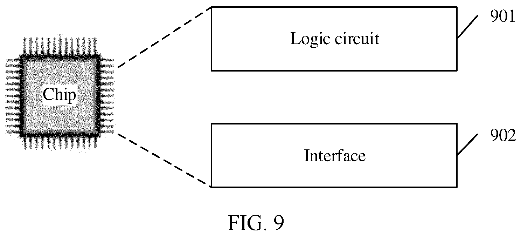

In another possible implementation, in the communication apparatus shown in FIG. 7, in the communication apparatus shown in FIG. 7, the processing module 20 may be one or more logic circuits, and the transceiver module 10 may be an input/output interface, also referred to as a communication interface, an interface circuit, an interface, or the like. Alternatively, the transceiver module 10 may be a sending unit and a receiving unit. The sending unit may be an output interface, and the receiving unit may be an input interface. The sending unit and the receiving unit are integrated into one unit, for example, an input/output interface. FIG. 9 is a diagram of another structure of a communication apparatus according to an embodiment of this application. As shown in FIG. 9, a communication apparatus shown in FIG. 9 includes a logic circuit 901 and an interface 902. That is, the processing module 20 may be implemented by using the logic circuit 901, and the transceiver module 10 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 9 shows an example in which the communication apparatus is a chip, and the chip includes the logic circuit 901 and the interface 902.

In embodiments of this application, the logic circuit and the interface may be coupled to each other. A specific manner of a connection between the logic circuit and the interface is not limited in embodiments of this application.

For example, when the communication apparatus is configured to perform the method, the function, or the step performed by the transmitter device in the foregoing method embodiment, the logic circuit 901 is configured to obtain the modulation and coding scheme MCS corresponding to each of the multiple spatial streams, and the interface 902 is configured to send the data of the multiple spatial streams based on the MCS corresponding to each spatial stream.

For example, when the communication apparatus is configured to perform the method, the function, or the step performed by the receiver device in the foregoing method embodiment, the interface 902 is configured to receive the data of the multiple spatial streams, where each of the multiple spatial streams corresponds to different modulation and coding scheme MCSs. The logic circuit 901 is configured to decode and demodulate the data of each spatial stream based on the MCS corresponding to each spatial stream.

It may be understood that for specific descriptions of the spatial stream, the MCS, and the like, refer to the foregoing method embodiments. Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of the embodiments shown in FIG. 9, refer to the foregoing embodiments. Details are not described herein again.

An embodiment of this application further provides a communication apparatus. The communication apparatus includes a system on chip (system on chip, SoC) chip. The SoC chip includes a transceiver, a processor coupled to the transceiver, and optionally further includes an internal memory and an external memory coupled to the processor. The transceiver is configured to receive and send a message. The processor is configured to execute program instructions stored in the internal memory and the external memory, so that the communication apparatus performs the method in the foregoing method embodiments.

The SoC is a system-on-chip, which means that the SoC is a product, is an integrated circuit with a dedicated target, and includes a complete system and all content of embedded software. The SoC is also a technology that implements an entire process of determining system functions, dividing software/hardware, and completing design.

An embodiment of this application further provides a communication system. The communication system includes a transmitter device and a receiver device. The transmitter device and the receiver device may be configured to perform the method in the foregoing method embodiments. The transmitter device may be an AP, and the receiver device may be a STA or an AP. Alternatively, the transmitter device is a STA, and the receiver device is a STA.

In addition, this application further provides a computer program. The computer program is used to implement operations and/or processing performed by the transmitter device in the method provided in this application.

This application further provides a computer program. The computer program is used to implement operations and/or processing performed by the receiver device in the method provided in this application.

This application further provides a computer-readable storage medium. The computer-readable storage medium stores computer code When the computer code is run on a computer, the computer is enabled to perform operations and/or processing performed by the transmitter device in the method provided in this application.

This application further provides a computer-readable storage medium. The computer-readable storage medium stores computer code When the computer code is run on a computer, the computer is enabled to perform operations and/or processing performed by the receiver device in the method provided in this application.

This application further provides a computer program product. The computer program product includes computer code or a computer program. When the computer code or the computer program is run on a computer, operations and/or processing performed by the transmitter device in the method provided in this application are/is performed.

This application further provides a computer program product. The computer program product includes computer code or a computer program. When the computer code or the computer program is run on a computer, operations and/or processing performed by the receiver device in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multiple spatial stream transmission method, wherein the method comprises:
obtaining a modulation and coding scheme MCS corresponding to each of multiple spatial streams; and
sending data of the multiple spatial streams based on the MCS corresponding to each spatial stream.

2. The method according to claim 1, wherein before the sending data of the multiple spatial streams based on the MCS corresponding to each spatial stream, the method further comprises:
sending first indication information, wherein the first indication information comprises a plurality of user fields, each of the plurality of user fields corresponds to one spatial stream, and each of the plurality of user fields is used to indicate an MCS of a corresponding spatial stream; or
the first indication information comprises at least one user field, each of the at least one user field comprises a plurality of user subfields, each of the plurality of user subfields corresponds to one spatial stream, and each of the at least one user field is used to indicate MCSs of the multiple spatial streams corresponding to the plurality of comprised user subfields.

3. The method according to claim 2, wherein the first indication information is carried in signal field sig information.

4. The method according to any one of claims 1 to 3, wherein the obtaining an MCS corresponding to each of multiple spatial streams comprises:
sending a first message, wherein the first message is used to request to obtain a capability of a receiver, and the capability of the receiver comprises a quantity of spatial streams receivable by the receiver device or an MCS range supported by the receiver device;
receiving a feedback message, wherein the feedback message comprises the capability of the receiver; and
determining, based on the capability of the receiver, the MCS corresponding to each of the multiple spatial streams.

5. The method according to claim 4, wherein the first message is carried in a beacon frame or a probe response frame, and/or the feedback message is carried in a probe request frame or an association request frame.

6. The method according to any one of claims 1 to 5, wherein the obtaining an MCS corresponding to each of multiple spatial streams comprises:
sending a measurement frame, and receiving a measurement result for the measurement frame, wherein the measurement result is used to represent channel quality of each of the multiple spatial streams; and
determining, based on the measurement result, the MCS corresponding to each of the multiple spatial streams.

7. The method according to claim 6, wherein the measurement result comprises at least one of the following: a post signal-to-noise ratio SNR of each spatial stream channel, an element value of a channel gain matrix H, a singular value decomposition SVD result V of the channel gain matrix, compression information of H or V, and a matrix obtained by H based on a preset mapping relationship.

8. The method according to any one of claims 1 to 7, wherein each of the multiple spatial streams is used to send one or more MPDUs, and a length of the one or more MPDUs of each spatial stream is less than or equal to a bearer capability of each spatial stream.

9. The method according to claim 8, wherein MPDUs sent in different spatial streams in the multiple spatial streams correspond to different priorities, and the method further comprises:
reliability of each of the multiple spatial streams is in a positive correlation with a priority of the MPUD sent by each spatial stream; and/or
adjusting the reliability of each spatial stream based on the priority of the MPDU sent by each of the multiple spatial streams, so that the reliability of each spatial stream is in the positive correlation with the priority of the MPUD sent by each spatial stream.

10. The method according to claim 9, wherein the reliability of the spatial stream is improved by reducing the MCS of the spatial stream.

11. The method according to claim 9 or 10, wherein the priority of the MPDU is determined based on a traffic identifier TID.

12. The method according to any one of claims 1 to 11, wherein the method further comprises:
receiving transmission feedback information, wherein the transmission feedback information indicates that a first MPDU of a first spatial stream in the multiple spatial streams fails to be transmitted; and
retransmitting the first MPDU through the first spatial stream or a spatial stream other than the first spatial stream.

13. The method according to any one of claims 1 to 12, wherein the method further comprises: adjusting, based on a transmission error rate corresponding to each of the multiple spatial streams, the MCS corresponding to each spatial stream.

14. The method according to claim 13, wherein the adjusting, based on a transmission error rate corresponding to each of the multiple spatial streams, the MCS corresponding to each spatial stream comprises:
increasing an MCS of a single spatial stream in the multiple spatial streams if a transmission error rate of the single spatial stream is less than a first preset threshold, or decreasing an MCS of a single spatial stream in the multiple spatial streams if the transmission error rate of the single spatial stream is greater than a second preset threshold.

15. A multiple spatial stream transmission method, wherein the method comprises:
receiving data of multiple spatial streams, wherein each of the multiple spatial streams corresponds to a different modulation and coding scheme MCS; and
decoding and demodulating data of each spatial stream based on the MCS corresponding to each spatial stream.

16. The method according to claim 15, wherein before the receiving data of multiple spatial streams, the method further comprises:
receiving first indication information, wherein the first indication comprises a plurality of user fields, each of the plurality of user fields corresponds to one spatial stream, and each of the plurality of user fields is used to indicate an MCS of a corresponding spatial stream; or
the first indication information comprises at least one user field, each of the at least one user field comprises a plurality of user subfields, each of the plurality of user subfields corresponds to one spatial stream, and each of the at least one user field is used to indicate MCSs of the multiple spatial streams corresponding to the plurality of comprised user subfields; and
the decoding and demodulating data of each spatial stream based on the MCS corresponding to each spatial stream comprises:
decoding and demodulating the data of each spatial stream based on an MCS that is of a spatial stream and that is indicated by the first indication information.

17. The method according to claim 16, wherein the first indication information is carried in signal field sig information.

18. The method according to any one of claims 15 to 17, wherein before the receiving data of multiple spatial streams, the method further comprises:
receiving a first message, wherein the first message is used to request to obtain a capability of a receiver, and the capability of the receiver comprises a quantity of spatial streams receivable by the receiver device or an MCS range supported by the receiver device;
sending a feedback message, wherein the feedback message comprises the capability of the receiver.

19. The method according to claim 18, wherein the first message is carried in a beacon frame or a probe response frame, and/or the feedback message is carried in a probe request frame or an association request frame.

20. The method according to any one of claims 15 to 19, wherein before the receiving data of multiple spatial streams, the method further comprises:
receiving a measurement frame, and sending a measurement result for the measurement frame, wherein the measurement result is used to represent channel quality of each of the multiple spatial stream.

21. The method according to claim 20, wherein the measurement result comprises at least one of the following: a post signal-to-noise ratio SNR of each spatial stream channel, an element value of a channel gain matrix H, a singular value decomposition SVD result V of the channel gain matrix, compression information of H or V, and a matrix obtained by H based on a preset mapping relationship.

22. The method according to any one of claims 15 to 21, wherein the data of each of the multiple spatial streams comprises one or more MPDUs corresponding to each spatial stream.

23. The method according to claim 22, wherein MPDUs sent in different spatial streams of the multiple spatial streams correspond to different priorities, and reliability of each spatial stream is in a positive correlation with a priority of an MPUD sent by each spatial stream.

24. The method according to claim 22 or 23, wherein the method further comprises:
checking the MPDU corresponding to each of the multiple spatial streams, to determine whether the MPDU is successfully checked; and
sending transmission feedback information if a first MPDU corresponding to a first spatial stream in the multiple spatial streams fails to be checked, wherein the transmission feedback information indicates that the first MPDU corresponding to the first spatial stream is incorrectly transmitted.

25. The method according to claim 24, wherein after the sending transmission feedback information, the method further comprises:
receiving data retransmitted through the first spatial stream or a spatial stream other than the first spatial stream, wherein the retransmitted data is decoded and demodulated to obtain the first MPDU.

26. A communication apparatus, comprising a module configured to perform the method according to any one of claims 1 to 14, or comprising a module configured to perform the method according to any one of claims 15 to 25.

27. A system on chip SoC chip, wherein the SoC chip comprises a transceiver, a processor, and an internal memory and an external memory that are coupled to the processor, the transceiver is configured to receive and send a message, and the processor is configured to execute program instructions stored in the internal memory and the external memory, so that the SoC chip performs the method according to any one of claims 1 to 25.

28. A communication system, comprising a transmitter device that performs the method according to any one of claims 1 to 15 and a receiver device that performs the method according to any one of claims 16 to 25.
